# EUROPEAN PATENT APPLICATION

(11) **EP 4 811 215 A1**
(43) Date of publication of application: **23.09.2026**
(21) Application number: 26165300.0
(22) Date of filing: 17.03.2026
(51) Int. Cl.: G06N 3/045, G06N 3/0475, G06N 3/084, G06N 3/086, G06N 3/088, G06N 3/09, G06N 20/00

(54) **METHODS FOR GENERATING SYNTHETIC LABELS AND DEVICES THEREOF**

(30) Priority: 17.03.2025 US 202519081411
(71) Applicant: F5, INC., Seattle, WA 98104 (US)
(72) Inventor: YE, Caitlin, Seattle, 98104 (US); KIT, Dmitry M., Seattle, 98104 (US); UPCROFT, Charissa, Seattle, 98104 (US); MARTIN, Gregory, Seattle, 98104 (US)
(74) Representative: Savi, Massimiliano

(57) **Abstract**

A method, system, and non-transitory computer-readable medium can include generating a prompt comprising input data. The prompt can be configured to process textual data, numerical data, mixed data, or combinations thereof. The input data can include at least one of new data, a selection of historical samples from historical data, or anomalies in event data from a stream. The prompt can then be provided to a large language model (LLM), which generates a synthetic label based on the prompt. The method can then determine if a prediction model is drifting by comparing a prediction label against the synthetic label for a match. The prediction model can generate the prediction label based on the input data. If the prediction label and the synthetic label do not match, the method can include initiating a corrective action. The corrective action can include at least one of generating an alert for a user, retraining the prediction model, or initiating an investigation.

## Description

### FIELD

This technology generally relates to generating synthetic labels and, more particularly, to methods for generating synthetic labels using large language models for model drift detection and devices thereof in an offline, real-time, or streaming context (such as cybersecurity and e-commerce).

### BACKGROUND

Drift can manifest as distributional shifts (e.g., data drift) or changes in the relationship between features and labels (e.g., concept drift). Traditional methods (such as generative adversarial networks (GANs) and other synthetic data approaches) for detecting model drift in machine learning models typically work by generating synthetic data that mimics the distribution of real data. GANs, in a non-limiting example, can consist of neural networks-such as a generator and a discriminator-that are trained simultaneously to produce synthetic data that is indistinguishable from real data. These synthetic data approaches aim to enhance the detection of drift by providing additional data points for comparison. However, these methods often require extensive computational resources and complex training processes and are thus fraught with inefficiencies and complexities that hinder the overall reliability and accuracy of the models. These methods typically rely on the availability of historical data to compare past predictions with current outcomes. However, in many real-world scenarios, historical data may be unavailable, incomplete, or insufficient to accurately track drift. This dependency on historical data makes it challenging to maintain model performance over time, especially in dynamic environments where data patterns evolve rapidly.

For instance, in industries such as cybersecurity or e-commerce, the data landscape can change quickly, making it difficult to gather and maintain comprehensive historical datasets. Traditional drift detection methods, which often involve statistical tests or monitoring tools, struggle to provide timely and accurate detection of drift under these conditions. Users are required to sift through large volumes of data to identify potential drift, which is both time-consuming and prone to errors. The lack of dynamic assistance in generating and refining detection criteria further exacerbates these challenges, leading to undetected drift and potential model failure. Consequently, there is a clear need for improved systems that can dynamically monitor model performance and detect drift without relying on extensive historical data.

### SUMMARY

A method that can detect and correct prediction model drift includes generating a prompt comprising input data. The prompt can be a textual prompt, structured data prompt, a domain specific context prompt, or combinations thereof. The input data can include at least one of new data, a selection of historical samples from historical data, or anomalies in event data from a stream. The prompt is then provided to a large language model (LLM), which generates a synthetic label based on the prompt. The method can then determine if a prediction model is drifting by comparing a prediction label against the synthetic label for a match. The prediction model can generate the prediction label based on the input data. If the prediction label and the synthetic label do not match, the method can include initiating a corrective action. The corrective action can include at least one of generating an alert for a user, automatically retraining the prediction model, or initiating an investigation.

A non-transitory computer-readable medium having stored thereon instructions comprising machine executable code which, when executed by at least one processor, causes the processor to generate a prompt comprising input data. The prompt can be a textual prompt, structured data prompt, a domain specific context prompt, or combinations thereof. The input data can include at least one of new data, a selection of historical samples from historical data, or anomalies in event data from a stream. The prompt is then provided to a large language model (LLM), which generates a synthetic label based on the prompt. The executable code, when executed by at least one processor, can further cause the processor to determine if a prediction model is drifting by comparing a prediction label against the synthetic label for a match. The prediction model can generate the prediction label based on the input data. If the prediction label and the synthetic label do not match, the executable code can cause the processor to initiate a corrective action. The corrective action can include at least one of generating an alert for a user, automatically retraining the prediction model, or initiating an investigation.

A computing apparatus including at least one of configurable hardware logic configured to be capable of implementing or a processor coupled to a memory and configured to execute programmed instructions stored in the memory to generate a prompt comprising input data. The prompt can be a textual prompt, structured data prompt, a domain specific context prompt, or combinations thereof. The input data can include at least one of new data, a selection of historical samples from historical data, or anomalies in event data from a stream. The prompt is then provided to a large language model (LLM), which generates a synthetic label based on the prompt. The programmed instructions, when executed by at least one processor, can further cause the processor to determine if a prediction model is drifting by comparing a prediction label against the synthetic label for a match. The prediction model can generate the prediction label based on the input data. If the prediction label and the synthetic label do not match, the programmed instructions can cause the processor to initiate a corrective action. The corrective action can include at least one of generating an alert for a user, automatically retraining the prediction model, or initiating an investigation.

A network traffic management system including at least memory comprising programmed instructions and one or more processors configured to generate a prompt comprising input data. The prompt can be a textual prompt, structured data prompt, a domain specific context prompt, or combinations thereof. The input data can include at least one of new data, a selection of historical samples from historical data, or anomalies in event data from a stream. The prompt is then provided to a large language model (LLM), which generates a synthetic label based on the prompt. The programmed instructions, when executed by at least one processor, can further cause the processor to determine if a prediction model is drifting by comparing a prediction label against the synthetic label for a match. The prediction model can generate the prediction label based on the input data. If the prediction label and the synthetic label do not match, the programmed instructions can cause the processor to initiate a corrective action. The corrective action can include at least one of generating an alert for a user, automatically retraining the prediction model, or initiating an investigation.

This invention provides a number of advantages, including offering a method, non-transitory computer-readable medium, and apparatus that enable the dynamic monitoring of model drift using synthetic labels generated by Large Language Models (LLMs). By leveraging LLMs to create synthetic labels that simulate various drift scenarios, the system ensures continuous and real-time detection of model drift without relying on extensive historical data. This approach significantly enhances the ability to maintain model performance over time, even in rapidly changing environments.

Additionally, the system dynamically generates synthetic labels that reflect potential shifts in data distribution and concept drift, allowing for continuous comparison with the model's predictions. This real-time monitoring capability ensures that any deviations are promptly detected, enabling timely intervention and retraining. By not depending on historical data, the invention is particularly effective in environments where data patterns change rapidly or where historical data is sparse or unavailable.

Overall, this invention addresses the inefficiencies in traditional drift detection methods by automating the generation of synthetic labels and providing a robust mechanism for continuous model monitoring. The system can generate an alert as soon as a mismatch between a prediction label and a synthetic label occurs and can prompt immediate actions. It improves the reliability and accuracy of machine learning models by ensuring they remain adaptive to new data patterns. The disclosed technology is a valuable tool for data scientists and analysts, offering a significant improvement over conventional systems by enhancing the robustness and responsiveness of model drift detection processes.

### BRIEF DESCRIPTION OF THE DRAWINGS

FIG. 1 is a block diagram of an example of an environment with a drift detection computing system;
FIG. 2A is a block diagram illustrating an example of an architecture of a drift detection computing system;
FIG. 2B is a block diagram illustrating an example of an architecture of a database;
FIG. 2C is a block diagram illustrating an example of an architecture of a user device;
FIG. 3 is an exemplary flowchart of an exemplary method of detecting drift in models using a large language model;
FIG. 4 is an exemplary flowchart of a process by the drift detection computing system; and
FIGS. 5A-5D are sections of FIG. 4 of the process by the drift detection computing system in an exploded view.

### DETAILED DESCRIPTION

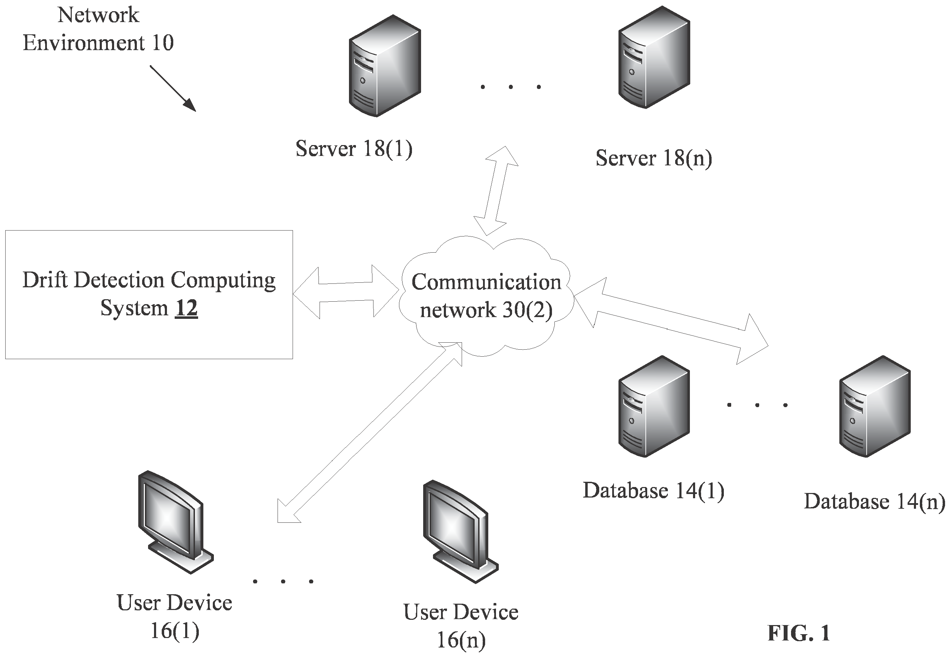

An environment 10 with an exemplary drift detection computing system 12 is shown in FIGS. 1-2A. In this example, the environment 10 includes the drift detection computing system 12, a plurality of databases 14(1)-14(n), a plurality of user devices 16(1)-16(n), and a plurality of servers 18(1)-18(n), although the environment may comprise other types and/or numbers of other systems, devices, components, and/or other elements in other configurations. This technology provides a number of advantages including providing systems, methods, and non-transitory computer readable media that enable the dynamic generation of synthetic labels for model drift detection. In a cybersecurity application, the system can detect emerging threat patterns by generating synthetic labels that anticipate new types of attacks, enabling preemptive model adjustments. In a financial services context, the system can identify shifts in transaction patterns that may indicate fraudulent activities, allowing for timely intervention. Additionally, in healthcare, the system can monitor patient data for anomalies that suggest the onset of medical conditions, facilitating early diagnosis and treatment.

Referring to more specifically to FIGS. 1-2A., in this example, the drift detection computing system 12 includes one or more processor(s) 22, a memory 24, and/or a communication interface 26, which are coupled together by a bus or other communication link 28, although the drift detection computing system 12 can include other types and/or numbers of elements in other configurations.

The processor(s) 22 of the drift detection computing system 12 may execute programmed instructions stored in the memory of the drift detection computing system 12 for any number of functions and other operations as illustrated and described by way of the examples herein. The processor(s) 22 of the drift detection computing system 12 may include one or more CPUs or general purpose processors with one or more processing cores, for example, although other types of processor(s) can also be used.

The memory 24 of the drift detection computing system 12 stores these programmed instructions for one or more aspects of the present technology as described and illustrated herein, although some or all of the programmed instructions could be stored elsewhere. A variety of different types of memory storage devices, such as random access memory (RAM), read only memory (ROM), hard disk, solid state drives, flash memory, or other computer readable medium which is read from and written to by a magnetic, optical, or other reading and writing system that is coupled to the processor(s), can be used for the memory 24.

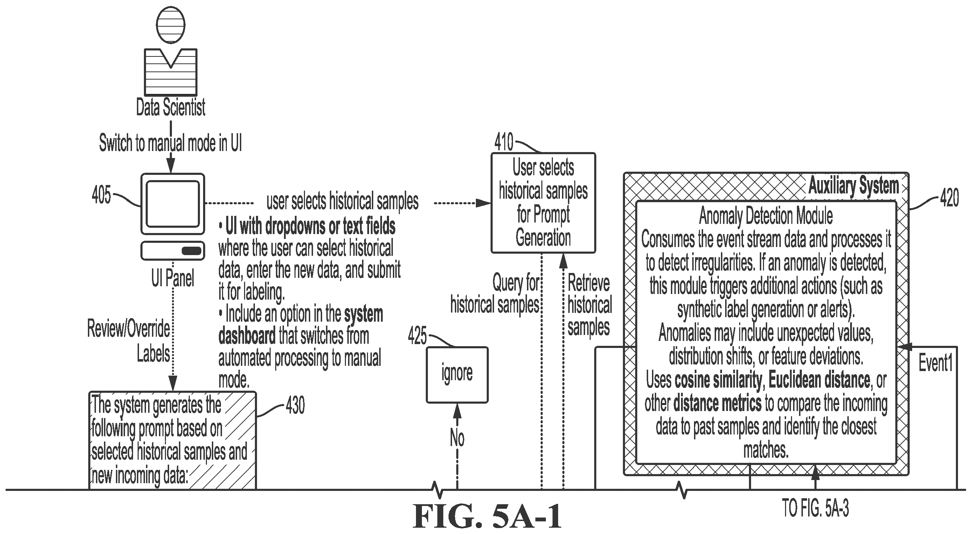

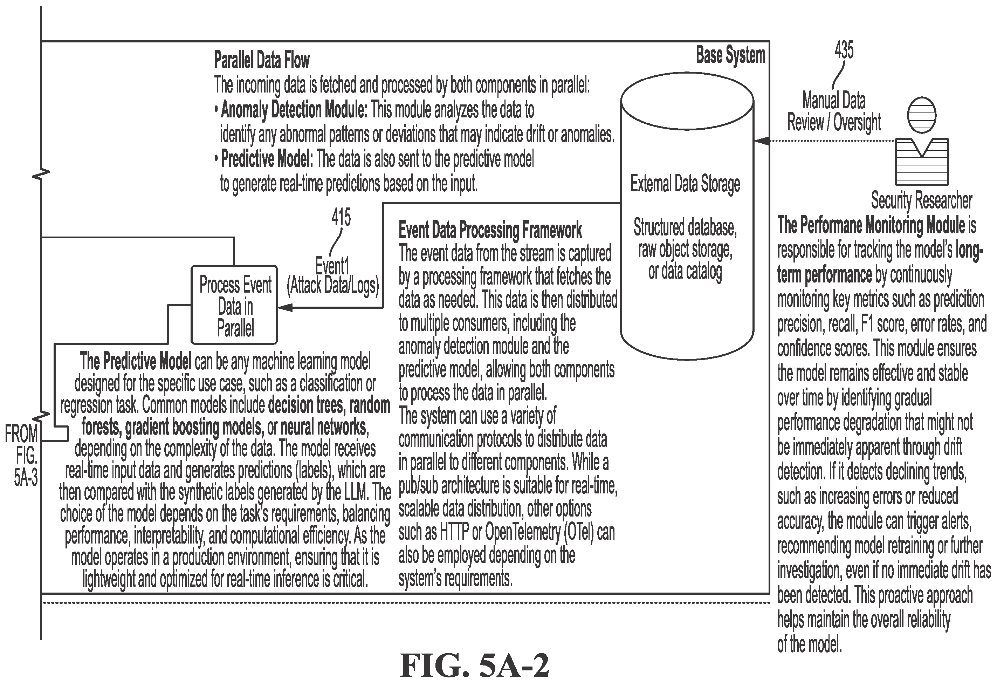

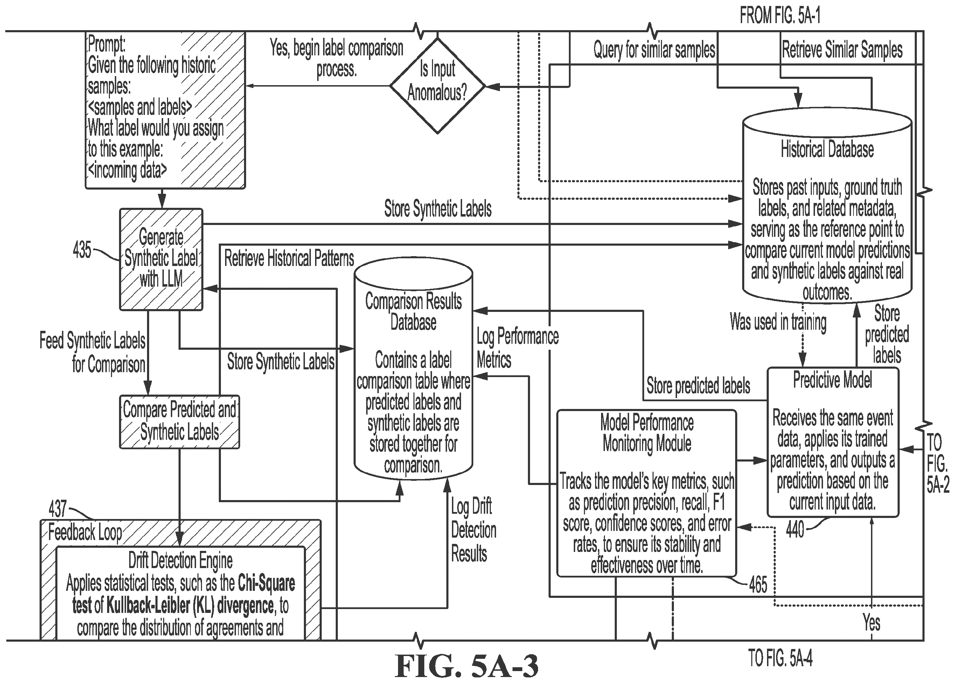

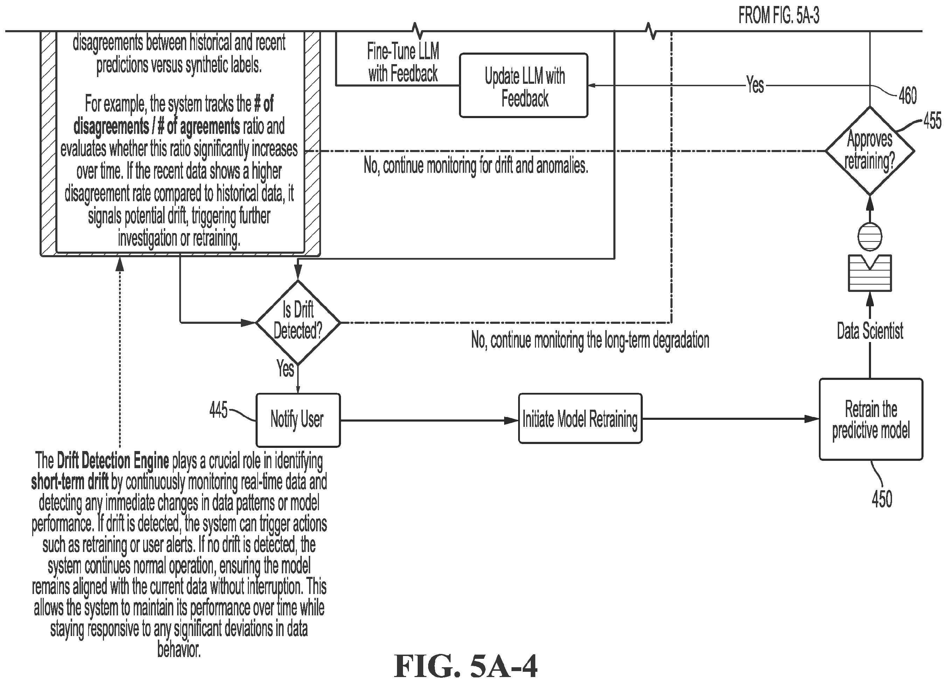

Accordingly, the memory 24 of the drift detection computing system 12 can store one or more applications that can include computer executable instructions that, when executed by the drift detection computing system 12 , cause the drift detection computing system 12 to perform actions, such as generate synthetic labels using large language models, and other actions as described and illustrated in the examples below with reference to FIGS. 1-5D. The application(s) can be implemented as modules, programmed instructions, or components of other applications. Further, the application(s) can be implemented as operating system extensions, module, plugins, or the like.

Even further, the application(s) may be operative in a cloud-based computing environment. The application(s) can be executed within or as virtual machine(s) or virtual server(s) that may be managed in a cloud-based computing environment. Also, the application(s), and even the drift detection computing system 12 itself, may be located in virtual server(s) running in a cloud-based computing environment rather than being tied to one or more specific physical computing devices. Also, the application(s) may be running in one or more virtual machines (VMs) executing on the drift detection computing system 12 . Additionally, in one or more embodiments of this technology, virtual machine(s) running on the drift detection computing system 12 may be managed or supervised by a hypervisor.

In this particular example, the memory 24 of the drift detection computing system 12 may include a large language model (LLM) 30, a machine learning model (MLM) 32, an anomaly detection module 34, a performance monitoring module 36, and a drift detection engine 38, which may be executed as illustrated and described by way of the examples herein, although the memory 24 can for example include other types and/or numbers of modules, platforms, algorithms, programmed instructions, applications, or databases for implementing examples of this technology. In some embodiments, the large language model 30, the machine learning model 32, the anomaly detection module 34, the performance monitoring module 36, and/or the drift detection engine 38 can be one unified module that performs the functions of the interface module 32, the knowledge graph model module 34, and/or the MLM 36.

The LLM 30 may be configured to perform a wide range of natural language processing tasks, including grouping data, generating labels, and engaging in conversational dialogue. Although not illustrated, the plurality of servers 18(1)-18(n) may host and/or manage a plurality of LLMs which may be pre-trained general purpose LLMs or fine-tuned LLMs. The plurality of servers 18(1)-18(n) may be a cloud-based server or an on-premises server. The fine-tuned LLM 30 may be accessed using an application programming interface (API) for use in applications. In another example, the fine-tuned LLM 30 may be hosted by the plurality of servers 18(1)-18(n) and managed remotely by the drift detection computing system 12 .

An LLM 30 is a type of artificial intelligence-machine learning (AI/ML) model that is used to process natural language data for tasks such as natural language processing, text mining, text classification, machine translation, question-answering, response generation, or the like. The LLM 30 uses deep learning or neural networks to learn language features from large amounts of data. The LLM 30 is, for example, trained on a dataset and then used to analyze data, generate predictions and code, project strings into a semantic vector space, or generate features from unseen data. The LLM 30 can be used to generate language features such as word embeddings, part-of-speech tags, named entity recognition, sentiment analysis, or the like. Unlike traditional rule-based NLP systems, the LLM 30 does not rely on pre-defined rules or templates to generate synthetic labels.

The drift detection computing system 12 may contain programs that train, implement, store, receive, retrieve, and/or transmit one or more MLMs 32. Machine learning models 32 may include a neural network model, a generative adversarial model (GAN), a recurrent neural network (RNN) model, a deep learning model (e.g., a long short-term memory (LSTM) model), a random forest model, a convolutional neural network (CNN) model, a support vector machine (SVM) model, logistic regression, XGBoost, and/or another machine learning model. Models 36 may include an ensemble model (e.g., a model comprised of a plurality of models). In some embodiments, training of a model may terminate when a training criterion is satisfied. Training criterion may include a number of epochs, a training time, a performance metric (e.g., an estimate of accuracy in reproducing test data), or the like. The drift detection computing system 12 may be configured to adjust model parameters during training. Model parameters may include weights, coefficients, offsets, or the like. Training may be supervised or unsupervised.

To mitigate bias introduced by the LLM 30, the drift detection computing system 12 can implement a comprehensive quality assurance (QA) or a calibration process for synthetic labels. This process can involve multiple stages of validation, including cross-referencing synthetic labels with ground truth data and using ensemble methods to ensure consistency. Additionally, the drift detection computing system 12 can employ techniques such as adversarial training and bias correction algorithms to identify and rectify potential biases. To avoid hallucinated or unrealistic labels, the drift detection computing system 12 can incorporate a feedback loop where generated labels are reviewed by domain experts and subjected to statistical anomaly detection. The feedback loop not only retrains the prediction model 32 but also incrementally updates the LLM 30 with new patterns identified from ongoing drift detections, ensuring continuous improvement and adaptation. Statistical anomaly detection can involve analyzing the distribution of generated labels to identify outliers that deviate significantly from expected patterns. Techniques such as z-score analysis and clustering algorithms can be used to detect and flag these anomalies for further review. This can ensure that only plausible and contextually accurate labels are used, thereby enhancing the reliability and accuracy of the model drift detection.

The drift detection computing system 12 may be configured to train machine learning models 32 by optimizing model parameters and/or hyperparameters (hyperparameter tuning) using an optimization technique, consistent with disclosed embodiments. Hyperparameters may include training hyperparameters, which may affect how training of the model occurs, or architectural hyperparameters, which may affect the structure of the model. An optimization technique may include a grid search, a random search, a gaussian process, a Bayesian process, a Covariance Matrix Adaptation Evolution Strategy (CMA-ES), a derivative-based search, a stochastic hill-climb, a neighborhood search, an adaptive random search, or the like. The drift detection computing system 12 may be configured to optimize models using known optimization techniques.

The supervised training of the MLM 32 in some examples can use a neural network training algorithm while the machine learning model 32 is offline before being deployed in the system and/or subsequent to deployment in order to continually improve accuracy. Accordingly, the drift detection computing system 12 may utilize deep learning models, such as a convolutional neural network (CNN) or long short-term memory (LSTM), for example. In other examples, the machine learning model 32 may be a binary classifier, such as a Support Vector Machine (SVM), Logistic Regression, Random Forest, or XGBoost, for example, and other types of machine learning models can also be used in other examples.

In this particular example, the MLM 32 can also be a prediction model 32. Prediction models may include statistical algorithms that are used to determine the probability of an outcome, given a set amount of input data. For example, prediction models may include regression models that estimate the relationships among input and output variables. Prediction models may also sort elements of a dataset using one or more classifiers to determine the probability of a specific outcome. Prediction models may be parametric, non-parametric, and/or semi-parametric models. In some examples, prediction models include random forests or artificial neural networks. Prediction models may additionally or alternatively include classification and regression trees, or other types of models known to those skilled in the art. To generate prediction models, the drift detection computing system 12 may analyze information applying machine-learning methods.

The anomaly detection module 34 may comprise executable instructions that are configured to analyze event data for abnormal patterns or deviations using historical data, or combinations thereof stored in the databases 14(1)-14(n) as illustrated and described in greater detail by way of the examples herein, although this module may have executable instructions that are configured to execute other types and/or functions or other operations to facilitate examples of this technology.

The performance monitoring module 36 may comprise executable instructions that are configured to track the long-term performance of the prediction model using key metrics such as precision, recall, F1 score, error rates, and confidence scores, or combinations thereof stored in the databases 14(1)-14(n) as illustrated and described in greater detail by way of the examples herein, although this module may have executable instructions that are configured to execute other types and/or functions or other operations to facilitate examples of this technology.

The drift detection engine 38 may comprise executable instructions that are configured to identify short-term drifts by comparing prediction labels against synthetic labels using statistical tests, or combinations thereof stored in the databases 14(1)-14(n) as illustrated and described in greater detail by way of the examples herein, although this module may have executable instructions that are configured to execute other types and/or functions or other operations to facilitate examples of this technology.

The communication interface 26 of the drift detection computing system 12 operatively couples and communicates between the drift detection computing system 12 and the one or more of databases 14(1)-14(n), the one or more of the client devices 16(1)-16(n), and the one or more servers 18(1)-18(n), although other types and/or numbers of connections and/or communication networks can be used.

While the drift detection computing system 12 is illustrated in this example as including a single device, the drift detection computing system 12 in other examples can include a plurality of devices each having one or more processors (each processor with one or more processing cores) that implement one or more steps of this technology. In these examples, one or more of the devices can have a dedicated communication interface or memory. Alternatively, one or more of the devices can utilize the memory, communication interface, or other hardware or software components of one or more other devices included in the drift detection computing system 12 .

Additionally, one or more of the devices that together comprise the drift detection computing system 12 in other examples can be standalone devices or integrated with one or more other devices or apparatuses, such as in one of the server devices or in one or more computing devices for example. Moreover, one or more of the devices of the drift detection computing system 12 in these examples can be in a same or a different communication network including one or more public, private, or cloud networks, for example.

Although an exemplary drift detection computing system 12 is described and illustrated herein, other types and/or numbers of systems, devices, components, and/or elements in other topologies can be used. It is to be understood that the systems of the examples described herein are for exemplary purposes, as many variations of the specific hardware and software used to implement the examples are possible, as will be appreciated by those skilled in the relevant art(s).

One or more of the components depicted in this drift detection computing system 12 may be configured to operate as virtual instances on the same physical machine. In other words, by way of example one or more of the drift detection computing system 12 may operate on the same physical device rather than as separate devices communicating through communication network(s). Additionally, there may be more or fewer drift detection computing system 12 than illustrated in FIG. 1.

In addition, two or more computing systems or devices can be substituted for any one of the systems or devices in any example. Accordingly, principles and advantages of distributed processing, such as redundancy and replication also can be implemented, as desired, to increase the robustness and performance of the devices and systems of the examples. The examples may also be implemented on computer system(s) that extend across any suitable network using any suitable interface mechanisms and traffic technologies, including by way of example only teletraffic in any suitable form (e.g., voice and modem), wireless traffic networks, cellular traffic networks, Packet Data Networks (PDNs), the Internet, intranets, and combinations thereof.

The examples may also be embodied as one or more non-transitory computer readable media having instructions stored thereon for one or more aspects of the present technology as described and illustrated by way of the examples herein. The instructions in some examples include executable code that, when executed by one or more processors, cause the processors to conduct steps necessary to implement the methods of the examples of this technology that are described and illustrated herein.

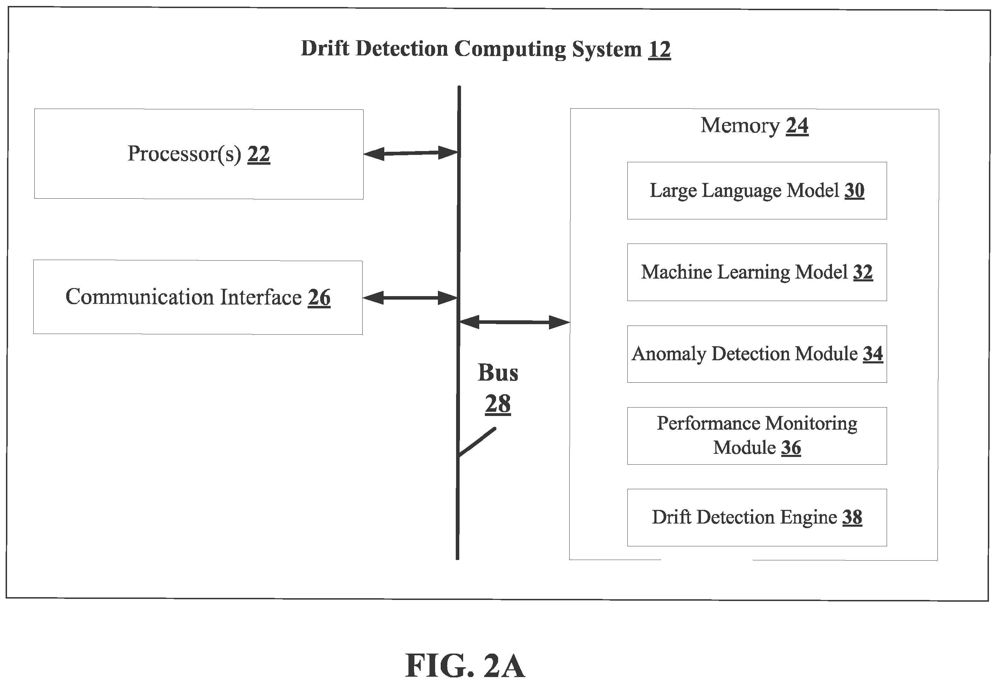

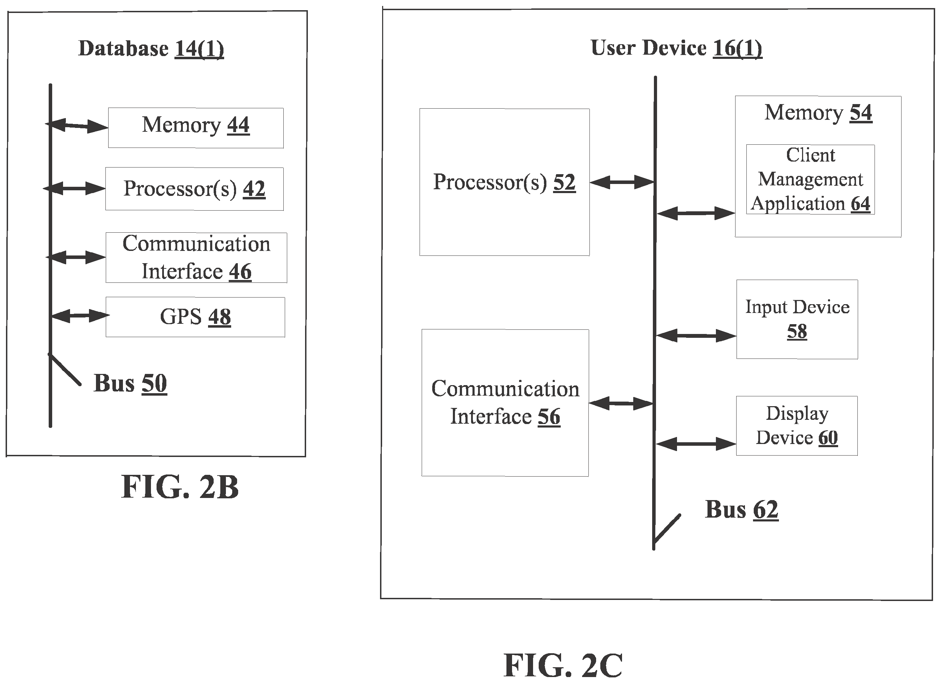

Referring to FIGS. 1 and 2B, the plurality of databases 14(1)-14(n) may comprise a variety of different types and/or numbers of systems, devices, or other things in the environment 10, such as a variety of different historical data, objects, comparison results, or other data or combinations thereof by way of example only. In this example, each of the databases 14(1)-14(n) at least have the same following structure and operation as shown in the example of the database 14(1) shown in FIG. 2B, although databases 14(1)-14(n) with other types and/or numbers of other systems, devices, components, and/or other elements may be used. Additionally, in this example, the database 14(1) has one or more processors 42, a memory 44, a communication interface, and a global positioning system (GPS) device 48 which are coupled together by a bus or other communication link 50, although each database of data could have other types and/or numbers of systems, devices, components and/or other elements in other configurations.

Referring to FIGS. 1 and 2C, the plurality of user devices 16(1)-16(n) in this example includes any type of computing device that can participate in the generating of code in an environment 10 with a client management application 64, such as mobile computing devices, desktop computing devices, laptop computing devices, tablet computing devices, virtual machines (including cloud-based computers), or the like. In this example, each of the client devices 16(1)-16(n) at least have the same following structure and operation as shown in the example of the client device 16(1) shown in FIG. 2C, although client devices with other types and/or numbers of other systems, devices, components, and/or other elements may be used. Additionally in this example, the client device 16(1) includes one or more processor 52, a memory 54, a communication interface 56, an input device 58, and a display device 60, which are coupled together by a bus or other communication link 62, types and/or numbers of systems, devices, components, or other elements in other configurations. Additionally, in this example the memory 54 can include a client management application 64 which enables the client 16(1) to interact with the drift detection computing system 12 and one or more of the databases 14(1)-14(n) as illustrated and described by way of the examples herein, although the memory 54 can include other programmed instructions, modules, applications, or other data for example.

The plurality of servers 18(1)-18(n) in this example includes one or more processors, a memory, and a communication interface, which are coupled together by a bus or other communication link, although other numbers and/or types of network devices could be used. In this example, the servers 18(1)-18(n) can be located at different locations and may each process requests received from the drift detection computing system 12 and/or the client devices 16(1)-16(n) via the communication network(s) 20. Various data and other applications may be operating on the drift detection computing system 12 and transmitting data (e.g., files or Web pages) to the drift detection computing system 12 and/or the client devices 16(1)-16(n). The servers 18(1)-18(n) may be hardware or software or may represent a system with multiple servers in a pool, which may include internal or external networks.

An exemplary method for dynamically generating synthetic labels using the LLM 30 in the environment 10 with the drift detection computing system 12 will now be described with reference to FIGS. 1-5D.

### INPUT DATA

### Manual Mode for Selection of Historical Data or Receipt of New Data as Input Data

In step 405, the drift detection computing system 12 can generate a graphical user interface (GUI) including a switch and transmit the GUI to a user device at one of the user devices 16(1)-16(n). Furthermore, the GUI can include interactive charts and graphs to visualize data trends and prediction model 32 performance metrics. In a non-limiting example, the drift detection computing system 12 can receive an interaction via the switch from the user at the user device at one of the user devices16(1)-16(n) which indicates to override an automated process (outlined below and not repeated for brevity) to enable a manual mode. The manual mode can be configured to allow receipt of input data from the user device at one of the user devices16(1)-16(n). The GUI can be modified to further include dropdowns and text fields for entering new data as the input data. Additionally, the modified GUI can include historical data presented in a list form or a tabular form, which can be configured to allow the selection of historical samples as the input data for labeling. The modified GUI can also include checkboxes, radio buttons, and sliders to provide users with various options for configuring and entering the new data as the input data. The GUI enables users to easily input the new data or select from the historical data for processing as the input data. The drift detection computing system 12 can then transmit the modified GUI to the user device at one of the user devices16(1)-16(n). In step 410, the drift detection computing system 12 can receive a selection of a historical sample from among the historical data as the input data from the user at the user device at one of the user devices16(1)-16(n). Additionally (or alternatively), the drift detection computing system 12 can receive text data via a text field from the user at the user device at one of the user devices16(1)-16(n) as the input data.

When the drift detection computing system 12 receives the selected historical sample from the user at one of the user devices 16(1)-16(n), the drift detection computing system 12 can query the selected historical sample from a historical database at one of the databases 14(1)-14(n). The historical database at one of the databases 14(1)-14(n) can be configured to store historical inputs, ground truth labels, and related metadata. The historical inputs can refer to the historical inputs received historically from users at the user devices 16(1)-16(n). Ground truth labels can be the accurate and true labels assigned to the historical inputs, representing the correct output or classification that the prediction model 32 should have predicted. The purpose of the historical database at one of the databases 14(1)-14(n) is to serve as a reference point to compare current prediction model 32 predictions for synthetic labels against real outcomes by storing real-world historical samples. The drift detection computing system 12 can then receive the selected historical sample from the historical database at one of the databases 14(1)-14(n).

### Automated Process with Event Data as Input Data

The drift detection computing system 12 can also conduct an automated process. In a non-limiting example, in step 415, the drift detection computing system 12 can fetch and receive event data from a stream. The stream can refer to a continuous flow of data generated in real-time, often from various sources such as sensors, user interactions, system logs, or combinations thereof. The stream can also include traffic to user devices at one of the user devices 16(1)-16(n), capturing data such as user requests, responses, and interactions with applications at one of the user devices 16(1)-16(n), or combinations thereof. The event data from the stream can include a wide range of information, including but not limited to, attack data, logs, transaction records, user interactions, system performance metrics, and sensor readings. To manage high-velocity data and prevent overloading the LLM, the drift detection computing system 12 can implement caching or rate-limiting techniques. Caching techniques can include temporarily storing frequently accessed data in a high-speed storage layer, such as RAM, to reduce latency and improve access times. This can significantly enhance performance by minimizing the need to repeatedly fetch data from slower, primary storage systems. Rate limiting techniques can control the number of requests a system 12 can handle within a specified time frame, thereby preventing overload and ensuring stable performance. Common rate limiting strategies can include, but not be limited to, token bucket, leaky bucket, fixed window algorithms, or combinations thereof each designed to manage traffic flow and maintain system reliability. The drift detection computing system 12 can store the event data in an external data storage at one of the databases 14(1)-14(n). The external data storage at one of the databases 14(1)-14(n) can be a structured database for raw object storage of the event data or a data catalog.

The drift detection computing system 12 can fetch and receive the event data from the stream using a processing framework. The processing framework can manage and process large volumes of data in real-time, enabling the drift detection computing system 12 to handle continuous data streams efficiently. The drift detection computing system 12 can be configured to distribute the event data to the anomaly detection module 34 and the predictive model 32 for processing in parallel. The drift detection computing system 12 can use communication protocols to distribute the event data to different components. In non-limiting examples, a pub/sub architecture, HTTP, OpenTelemetry (OTel), or other communication protocols known in the art can be used depending on system requirements.

### Anomaly Detection Module

In step 420, the drift detection computing system 12 can use the anomaly detection module 34 to analyze the event data for abnormal patterns or deviations that may indicate drift or anomalies. This analysis helps in identifying potential issues with the performance of the prediction model 32, ensuring timely detection and intervention to maintain the accuracy and reliability of the prediction model 32.

The drift detection computing system 12 can compare the event data to similar historical samples to identify close matches. To begin, the system can query the historical database at one of the databases 14(1)-14(n) for similar historical samples. The drift detection computing system 12 can determine whether a historical sample is similar to a sample in the event data by using cosine similarity, Euclidean distance, Manhattan distance, Mahalanobis distance, Jaccard similarity, and other distance metrics known in the art.

In a non-limiting example, cosine similarity is a measure that calculates the cosine of the angle between two non-zero vectors in an inner product space. It can be used to determine how similar the two vectors are, with a value of 1 indicating that the vectors are identical, and a value of 0 indicating that they are orthogonal. This metric can be particularly useful in high-dimensional spaces where the magnitude of the vectors may not be as important as their direction. To compare a sample in the event data to a historical sample in the historical database at one of the databases 14(1)-14(n) using cosine similarity, the drift detection computing system 12 can first represent both samples as vectors in the same feature space. Each vector can consist of numerical values corresponding to the features of the samples.

The cosine similarity between the two vectors can then be calculated using the formula: Cosine Similarity = (A · B) / (∥A∥ ∥B∥), where A and B are the vectors representing the event data sample and the historical sample, respectively, "·" denotes the dot product of the vectors, and ∥A∥ and ∥B∥ are the magnitudes (or lengths) of the vectors. The dot product can measure the degree to which the vectors point in the same direction, while the magnitudes can normalize the vectors to account for their lengths. The resulting cosine similarity value can range from -1 to 1, with 1 indicating that the vectors are identical, 0 indicating that they are orthogonal (i.e., completely dissimilar), and -1 indicating that they are diametrically opposed. By calculating the cosine similarity between the event data sample and each historical sample, the drift detection computing system 12 can determine which historical samples are most similar to the current event data.

In another non-limiting example, Euclidean distance is a measure of the true straight-line distance between two points in Euclidean space. It can be used to determine how similar two points are by calculating the distance between them. To compare a sample in the event data to a historical sample in the historical database at one of the databases 14(1)-14(n) using Euclidean distance, the drift detection computing system 12 can first represent both samples as points in the same feature space. Each point can consist of numerical values corresponding to the features of the samples.

For example, the Euclidean distance between the two points can then be calculated using the formula: Euclidean Distance = √((x1 - x2)² + (y1 - y2)² + ... + (zn - zm)²), where (x1, y1, ..., zn) and (x2, y2, ..., zm) are the coordinates of the event data sample and the historical sample, respectively. This formula calculates the square root of the sum of the squared differences between corresponding coordinates of the points. The resulting Euclidean distance value indicates how far apart the two points are in the feature space, with smaller values indicating greater similarity. By calculating the Euclidean distance between the event data sample and each historical sample, the drift detection computing system 12 can determine which historical samples are most similar to the current event data. The historical samples with the smallest Euclidean distance values can be considered the closest matches. Other distance metrics or formulas can similarly be used to determine closest matches.

The drift detection computing system 12 can then receive the similar historical samples (i.e., the closest matches) from the historical database at one of the databases 14(1)-14(n). This process can help in determining whether the current event data contains an anomaly. Anomalies can encompass a variety of irregularities in the data (e.g., unexpected values, distribution shifts, feature deviations) that may indicate potential issues with the performance of the prediction model 32. These anomalies can include unexpected values, which are data points that significantly deviate from the norm or expected range. Distribution shifts refer to changes in the overall distribution of the data, such as a shift in the mean or variance, which can affect the performance of the prediction model 32. Feature deviations occur when the relationships between input features and target variables change, potentially leading to inaccurate predictions. Other types of anomalies can include sudden spikes or drops in data values, temporal anomalies where patterns change over time, and contextual anomalies where data points are unusual in a specific context but not globally.

Upon detecting an anomaly, the drift detection computing system 12 can then trigger the generation of synthetic labels as outlined in step 430 below and not repeated herein for brevity. When no anomalies are detected, as illustrated at step 425, the drift detection computing system 12 can ignore the event data. Detecting these anomalies before using the Large Language Model (LLM) 30 to generate synthetic labels offers several benefits. First, it allows for early identification of potential issues, enabling timely intervention to prevent degradation of the prediction model 32. By addressing anomalies promptly, the drift detection computing system 12 can maintain the accuracy and reliability of the prediction model 32. Second, detecting anomalies helps in refining the synthetic label generation process. By understanding the nature of the anomalies, the drift detection computing system 12 can generate more accurate and contextually relevant synthetic labels, improving the overall quality of the drift detection process. Third, early anomaly detection can trigger various actions as proactive measures.

In a non-limiting example, actions can include (i) generating alerts to notify relevant stakeholders, (ii) initiating model 32 retraining to adapt to new data patterns, (iii) adjusting model 32 parameters to better handle the detected anomalies, (iv) logging the anomalies for further analysis and investigation, or (v) other actions known in the art. To create an alert, the drift detection computing system 12 can first identify an anomaly through the anomaly detection module 34. Once an anomaly is detected, the drift detection computing system 12 can compile relevant information about the anomaly, including the nature of the deviation, the affected data points, and the potential impact on the prediction model 32. The drift detection computing system 12 can then format this information into a structured alert message. This alert message can include details such as the time of detection, the type of anomaly, the severity level, and recommended actions for users. The drift detection computing system 12 can use communication protocols such as email, SMS, integrated messaging platforms, or other communication protocols known in the art to transmit the alert to the relevant users at user devices 16(1)-16(n). By ensuring timely and detailed notifications, these alerts can enable users to take immediate corrective actions, thereby maintaining the accuracy and reliability of the prediction model 32.

In another non-limiting example, the drift detection computing system 12 can initiate prediction model 32 retraining to adapt to new data patterns with methods known in the art. In a non-limiting example, when an anomaly such as a newly detected drift (where a synthetic label and a prediction label do not match as described above and not repeated herein for brevity) is detected, the drift detection computing system 12 can assess the extent of the deviation and determine if retraining is necessary. The drift detection computing system 12 can then gather relevant data, including the anomalous event data and corresponding historical samples, to create an updated training dataset. This dataset can be used to retrain the prediction model 32, ensuring that it learns from the new data patterns and improves its predictive accuracy. The retraining process can be automated or semi-automated, with the drift detection computing system 12 providing recommendations and seeking approval from relevant users before proceeding. By continuously adapting the prediction model 32 to new data patterns, the drift detection computing system 12 can maintain high levels of accuracy and reliability.

Additionally, the drift detection computing system 12 can adjust prediction model 32 parameters to better handle the detected anomalies. When an anomaly is identified, the drift detection computing system 12 can analyze the underlying cause and determine if parameter adjustments are needed to improve the performance of the prediction model 32. The drift detection computing system 12 can modify parameters such as learning rates, regularization factors, or feature weights to optimize the prediction model 32's response to the new data patterns. These adjustments can be made dynamically, allowing the prediction model 32 to quickly adapt to changes without the need for complete retraining. By fine-tuning the model parameters, the drift detection computing system 12 can enhance the robustness of the prediction model 32 and ensure it continues to provide accurate predictions.

Additionally, as illustrated at step 435, the drift detection computing system 12 can log and store the anomalies for further analysis and investigation. When an anomaly is detected, the drift detection computing system 12 can record detailed information about the event, including the nature of the deviation, the affected data points, and the context in which the anomaly occurred. This log can be stored in a dedicated database at one of the databases 14(1)-14(n), allowing data scientists and analysts to review and investigate the anomalies at a later time. The logged information can be used to identify recurring patterns, understand the root causes of anomalies, and develop strategies to prevent similar issues in the future. By maintaining a comprehensive log of anomalies, the drift detection computing system 12 can support continuous improvement of the prediction model 32 and contribute to the overall reliability and effectiveness of the system.

These proactive measures can ensure that the prediction model 32 remains robust and effective over time, even in the face of evolving data patterns and potential drifts.

### Predictive Model

In step 440, as outlined above, the drift detection computing system 12 can also distribute the event data to the prediction model 32 to generate real-time predictions for samples in the event data (in parallel to distributing the event data to the anomaly detection module 34). The prediction model 32 can be configured to apply trained parameters by utilizing the weights, biases, historical data from the historical database at one of the databases 14(1)-14(n), and other learned coefficients obtained during the training phase to train the prediction model 32. These trained parameters can be applied to the input features of the event data to compute the output predictions.

The prediction model 32 can be configured to generate predictions that include prediction labels corresponding to the event data. The drift detection computing system 12 can also store the prediction labels with corresponding synthetic labels (synthetic labels which are generated by the drift detection computing system 12 as outlined in step 430), in a comparison results database at one of the databases 14(1)-14(n). The comparison results database at one of the databases 14(1)-14(n) can be configured to contain a label comparison table where the prediction labels and corresponding synthetic labels are stored together in pairs for a later comparison by the drift detection computing system 12 (as outlined below and not repeated herein for brevity). The drift detection computing system 12 can also store the prediction labels in the historical database at one of the databases 14(1)-14(n).

The prediction model 32 can be any machine learning model designed for a specific use case, such as classification, regression tasks, anomaly detection, clustering, recommendation systems, time series forecasting, natural language processing, or other use cases known in the art. Common machine learning model algorithms can include, but are not limited to, decision trees, random forests, gradient boosting models, neural networks, or other models known in the art, depending on the complexity of the event data. Decision trees can be interpretable models that split the data into branches to make predictions based on feature values. Random forests can be ensembles of decision trees that improve prediction accuracy by averaging the results of multiple trees, reducing overfitting. Gradient boosting models can be another ensemble technique that builds trees sequentially, with each tree correcting the errors of the previous ones, leading to high performance on complex datasets. Neural networks are composed of layers of interconnected nodes that can learn intricate patterns in data through backpropagation and are particularly effective for certain tasks. Other models known in the art, such as support vector machines and k-nearest neighbors, can also be used depending on the specific requirements and characteristics of the event data. The type of prediction model 32 can be selected based on the specific requirements of the task required by the user with considerations of balancing performance, interpretability, and computational efficiency. For instance, decision trees and random forests may be chosen for their interpretability and ease of use. The gradient boosting models and neural networks may be chosen for their high performance and ability to handle complex data patterns. Other considerations can be used for the selection of the type of the prediction model 32.

The prediction model 32 can be configured to operate in a production environment that is lightweight and optimized for real-time inference. This optimization can involve techniques such as model compression, pruning, and quantization to reduce the model 32 size and improve inference speed. Additionally, the drift detection computing system 12 can leverage hardware accelerators like GPUs or TPUs to further enhance the computational efficiency of the prediction model 32. These optimizations ensure that the model can process incoming event data swiftly, providing timely predictions that are crucial for dynamic environments.

The prediction model 32 can also be applied to the input data received from the user in the manual mode (as outlined above and not repeated herein for brevity). In the manual mode, as outlined above, the users can manually input data or select historical samples for the prediction model 32 to process as input data for the generation of prediction labels. This flexibility allows users to validate the predictions of the prediction model 32 and make adjustments as needed, ensuring that the model 32 remains accurate and dependable in various scenarios.

By distributing event data to both the anomaly detection module 34 and the prediction model 32, the drift detection computing system 12 ensures comprehensive monitoring and prediction capabilities. The anomaly detection module 34 can identify potential issues and trigger necessary actions, while the prediction model 32 provides real-time insights based on the latest data. This dual approach enhances the ability of the system 12 to maintain the accuracy and reliability of the prediction model 32, even in the face of evolving data patterns.

### SYNTHETIC LABELS USING PROMPTS AND LLMS

In step 430, the drift detection computing system 12 can generate a prompt. In some non-limiting examples, the prompt can include the input data (e.g., the new data from the user, the selected historical samples, the event data, anomalies found in the event data). In particular, the prompt can include the selected historical samples and can also include the received text data entered into the text field by the user device at one of the user devices 16(1)-16(n) as the input data. Additionally, the input data can include samples from the event stream that are selected by the automated process as outlined in steps 415 through 430.

The prompt can be configured to direct a Large Language Model (LLM) 30 to generate a synthetic label for the input data. The drift detection computing system 12 can provide the prompt to the LLM 30. In step 435, the drift detection computing system 12 can use the LLM 30 to generate the synthetic label by analyzing the input data, identifying relevant patterns, and assigning appropriate labels that simulate potential shifts in data distribution or concept drift. The LLM 30 can be configured to analyze the input data by breaking it down into its constituent features and examining the relationships between these features. The LLM 30 can use its pre-trained knowledge and contextual understanding to detect patterns that are indicative of certain labels. For example, the LLM 30 can recognize clusters of data points that share similar characteristics or trends that suggest a shift in the underlying data distribution. By leveraging its extensive training on diverse datasets, the LLM 30 can identify subtle and complex patterns that may not be immediately apparent through traditional analysis methods.

Once the LLM 30 identifies the relevant patterns, it can be configured to assign an appropriate label to the input data based on these patterns. The LLM 30 can use its understanding of the context and the relationships between features to determine the most likely label for the input data. For instance, if the input data shows a sudden increase in a particular feature that is historically associated with a specific outcome, the LLM 30 can assign a label that reflects this outcome. The LLM 30 can also consider the overall distribution of the data and any detected shifts to ensure that the assigned label accurately represents the potential changes in the data. The drift detection computing system 12 can then receive the synthetic label of the input data from the LLM 30. The drift detection computing system 12 can store and associate the synthetic label with the corresponding prediction label in the comparison results database at one of the databases 14(1)-14(n).

In step 437, the drift detection computing system 12 can then compare the synthetic label against the corresponding prediction label. The drift detection computing system 12 can use a drift detection engine 38 for the comparison to identify drifts. The drift detection engine 38 can be configured to identify short-term drifts by continuously monitoring the event data (e.g., real-time data, or identified anomalies in the event data) and detecting any immediate changes in data patterns or model performance. The drift detection engine 38 can be configured to apply statistical tests, such as the chi-square test, Kullback-Leibler (KL) divergence, and other statistical tests known in the art, to compare the distribution of agreements and disagreements between the prediction labels (for historical data and the event data) against the corresponding synthetic labels.

The chi-square test can be used to determine if there is a significant difference between the expected frequencies (based on the prediction labels) and the observed frequencies (based on the synthetic labels). By comparing these frequencies, the drift detection engine 38 can identify whether the distribution of labels has changed over time. The KL divergence test can measure the difference between two probability distributions, specifically the distribution of prediction labels and the distribution of synthetic labels. This test can help quantify how much one distribution diverges from the other, indicating potential drift. Using statistical tests like the chi-square test and KL divergence is helpful because they provide quantitative measures of the differences between distributions, allowing for objective and precise detection of drifts.

The drift detection computing system 12 can then log drift detection results from the drift detection engine 38 in the comparison results database at one of the databases 14(1)-14(n). By maintaining a comprehensive log of drift detection results, the system can support continuous monitoring and analysis, ensuring that any detected drifts are promptly addressed to maintain the accuracy and reliability of the prediction model 32.

### Feedback Loop

In a non-limiting example, the drift detection computing system 12 can track the number of disagreements and/or the number of agreements between the prediction labels and the synthetic labels. The drift detection computing system 12 can compare the pairs in the comparison results database at one of the databases 14(1)-14(n). The drift detection computing system 12 can evaluate whether the ratio of the number of disagreements to the number of agreements significantly increases over time. To determine if the ratio is significantly increasing, the drift detection computing system 12 can use statistical methods to analyze the trend of the ratio over a defined period. A significant increase can be predefined based on historical data and domain-specific thresholds, such as a consistent upward trend over several monitoring intervals or a sudden spike that exceeds a set threshold value.

If the ratio of the number of disagreements to the number of agreements significantly increases over time, it can be an indication of drift. If the recent data shows the number of disagreements passing a predetermined threshold, it can also be an indication of potential drift. When there is an indication of drift, as illustrated in step 445, the drift detection computing system 12 can notify the user of the drift by generating an alert for the user at one of the devices 16(1)-16(n). The drift detection computing system 12 can transmit the alert to the user using communication protocols such as email, SMS, integrated messaging platforms, or other communication protocols known in the art, ensuring timely notification, and enabling users to take immediate corrective actions as described further below.

### Corrective Actions

In step 450, the drift detection computing system 12 can also send feedback to the user at one of the user devices 16(1)-16(n) for approval on how the drift detection computing system 12 will retrain the prediction model 32, as illustrated in step 455. The feedback can include details such as the nature of the detected drift, which can refer to the specific type of anomaly identified, such as unexpected values, distribution shifts, or feature deviations. The feedback can also include the proposed retraining dataset, which may consist of the most recent event data, historical samples, and any newly identified anomalies. Additionally, the feedback can outline the expected improvements in the performance of the prediction model 32, such as increased accuracy, reduced error rates, and enhanced robustness to future drifts.

If the drift detection computing system 12 receives a disapproval of the retraining from the user at one of the user devices 16(1)-16(n), the drift detection computing system 12 can refrain from implementing the retraining of the prediction model 32 and continue monitoring for additional drifts and anomalies at step 465 (as outlined below and not repeated herein for brevity). As illustrated in step 460, if the drift detection computing system 12 receives approval from the user at one of the user devices 16(1)-16(n), the drift detection computing system 12 can proceed with the retraining of the prediction model 32. The retraining process can involve updating the model 32 with new data, which includes the latest event data and any additional labeled event data that reflects the current data distribution and patterns. The drift detection computing system 12 can fine-tune the model 32 parameters by adjusting hyperparameters such as learning rates, regularization strengths, and feature weights to optimize the performance of the prediction model 32. The drift detection computing system 12 can validate the updated prediction model 32 by evaluating the model 32 on a separate validation dataset to ensure that the retrained model 32 generalizes well to new, unseen data and meets the desired performance criteria.

Additionally, the drift detection computing system 12 can fine-tune the LLM 30 with the feedback to enhance the synthetic label generation capabilities of the LLM30. This fine-tuning process can involve updating the LLM 30 with new training data that includes the latest event data and any identified anomalies, allowing the LLM 30 to learn from the most recent patterns and trends. The drift detection computing system 12 can adjust the parameters of the LLM 30 to improve its accuracy in generating synthetic labels that accurately reflect potential shifts in the data distribution. By continuously refining the LLM 30, the drift detection computing system 12 can ensure that the synthetic labels remain relevant and useful for detecting drifts and maintaining the performance of the prediction model 32.

The drift detection computing system 12 can also trigger further investigation when a short-term drift is detected by the drift detection engine 38. This investigation can involve analyzing the root causes of the drift by examining the specific data points and features that contributed to the detected anomalies. The drift detection computing system 12 can perform a detailed analysis of the event data to identify patterns or correlations that may have led to the drift. For example, the drift detection computing system 12 can use statistical analysis, data visualization techniques, and feature importance metrics to pinpoint the factors responsible for the drift. Potential underlying issues that may contribute to the drift can include changes in data collection methods, shifts in user behavior, external environmental factors, or system configuration changes.

The drift detection computing system 12 can examine the anomalies by reviewing the flagged data points and comparing them to historical data to understand the nature and extent of the deviations. The drift detection computing system 12 can identify whether the anomalies are isolated incidents or part of a broader trend. By understanding the context and characteristics of the anomalies, the drift detection computing system 12 can gain insights into the factors driving the drift.

The drift detection computing system 12 can use this information to develop strategies to prevent similar drifts in the future. These strategies can include implementing more robust data validation and preprocessing steps, adjusting the model's training process to account for identified patterns, and continuously monitoring key data sources for changes. By addressing the root causes and underlying issues, the drift detection computing system 12 can enhance the long-term stability and reliability of the prediction model 32, ensuring it remains effective in dynamic environments.

As illustrated in step 465, the drift detection computing system 12 can use a model performance monitoring module 36 to track the long-term performance of the prediction model 32 by continuously and dynamically monitoring key metrics such as prediction precision, recall, F1 score, error rates, confidence scores, and other key metrics known in the art. Precision measures the accuracy of the positive predictions made by the model 32, recall measures the ability of the model to identify all relevant instances, and the F1 score is the harmonic mean of precision and recall, providing a balanced measure of performance of the model 32. Error rates indicate the frequency of incorrect predictions, and confidence scores reflect the certainty in the predictions of the model 32. These key metrics can help track the long-term performance of the prediction model 32 by identifying gradual performance degradation that might not be immediately apparent through drift detection. The drift detection computing system 12 can store logs of performance of the key metrics in the comparison results database at one of the databases 14(1)-14(n). The model performance monitoring module 36 can ensure the prediction model 32 remains effective and stable over time by identifying declining trends, such as increasing errors or reduced accuracy. If the drift detection computing system 12 detects such trends, it can trigger alerts, recommending model retraining (as outlined above in steps 450 and 455) or further investigation (as outlined above), even if no immediate drift is detected. This proactive approach helps maintain the overall reliability of the prediction model 32.

If the drift detection computing system 12 does not detect a drift, the drift detection computing system 12 can continue normal operation, ensuring the prediction model 32 remains aligned with the event data without interruption. The drift detection computing system 12 can continue monitoring for long-term degradation using the model performance monitoring module 36 and move to step 465 (as outlined above and not repeated herein for brevity). This approach allows the drift detection computing system 12 to maintain performance over time while staying responsive to any significant deviations in the behavior of the prediction model 32.

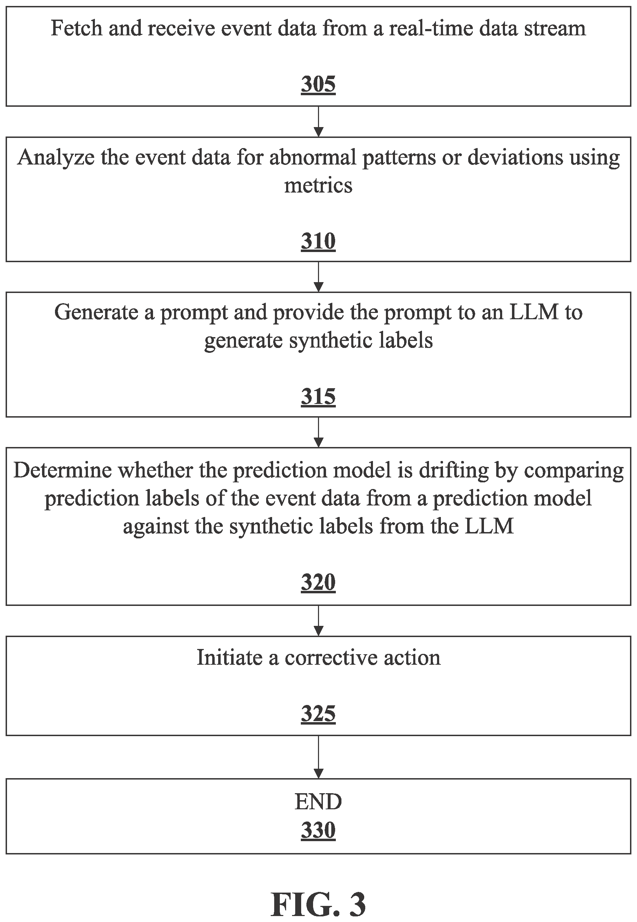

Turning to FIG. 3, FIG. 3 is a flow diagram illustrating an exemplary method 300, in accordance with certain embodiments of the disclosed technology. The steps of method 300 may be performed by one or more components of the drift detection computing system 12.

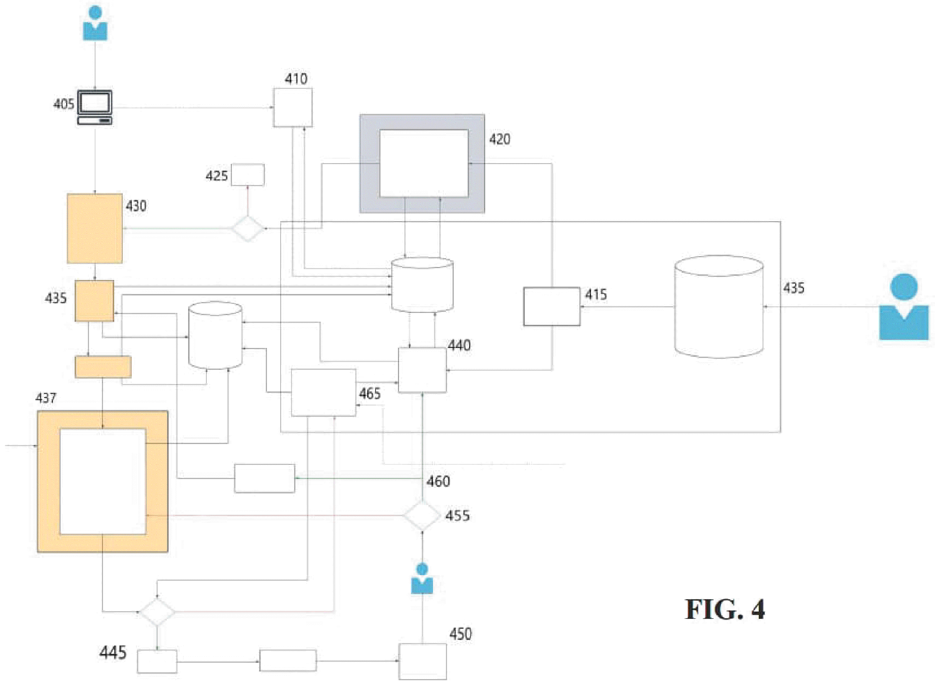

Method 300 of FIG. 3 is similar to the flow of FIG. 4. In step 305, the drift detection computing system 12 may fetch and receive event data from a real-time data stream as outlined in the descriptions of steps 415 through 420 in FIG. 4 and are not repeated herein for brevity. In step 310, the drift detection computing system 12 may analyze the event data for abnormal patterns or deviations using metrics as outlined in the description of step 420 of FIG. 4 (and not repeated herein for brevity).

In step 315, the drift detection computing system 12 may generate a prompt and provide the prompt to the LLM 30 to generate synthetic labels as described in steps 430 through 437 of FIG. 4 (and not repeated herein for brevity). In step 320, the drift detection computing system 12 may determine whether the prediction model is drifting by comparing prediction labels of the event data from a prediction model against the synthetic labels from the LLM as described in steps 435 through 450 of FIG. 4 (and not repeated herein for brevity).

In step 325, the drift detection computing system 12 may initiate a corrective action as described in steps 455 through 465 of FIG. 4 (and not repeated herein for brevity). As outlined in steps 455 through 465 of FIG. 4, the drift detection computing system 12 may iteratively repeat the process and generate additional prompts (e.g., the second prompt) as described above and not repeated herein for brevity. In step 330, the process may terminate.

Having thus described the basic concept of the invention, it will be rather apparent to those skilled in the art that the foregoing detailed disclosure is intended to be presented by way of example only and is not limiting. Various alterations, improvements, and modifications will occur and are intended to those skilled in the art, though not expressly stated herein. These alterations, improvements, and modifications are intended to be suggested hereby, and are within the spirit and scope of the invention. Additionally, the recited order of processing elements or sequences, or the use of numbers, letters, or other designations, therefore, is not intended to limit the claimed processes to any order except as may be specified in the claims. Accordingly, the invention is limited only by the following claims and equivalents thereto.

## Claims

1. A method for detecting drift in models implemented by a network traffic management system comprising one or more network traffic apparatuses, user devices, or server devices comprising:
generating a prompt comprising input data;
determining whether a prediction model is drifting by comparing a prediction label against a synthetic label for a match, wherein the prediction model generates the prediction label based on the input data, wherein the synthetic label is received from a large language model (LLM), and wherein the LLM is configured to generate the synthetic label based on the prompt; and
in response to determining the prediction label and the synthetic label do not match, initiating a corrective action.

2. The method as set forth in claim 1, wherein the input data comprises at least one of new data, a selection of historical samples from historical data, or anomalies in event data from a stream.

3. The method as set forth in claim 2, wherein the event data from the stream is distributed in parallel to (i) the prediction model for the generation of prediction labels, and (ii) an anomaly detection module for the detection of the anomalies in the event data.

4. The method as set forth in claim 3, wherein comparing the prediction label against the synthetic label further comprises:
retrieving historical prediction labels and corresponding historical synthetic labels from a comparison results database;
comparing the historical prediction labels against the corresponding historical synthetic labels to determine a number of agreements and a number of disagreements;
determining whether the prediction model has a drift by determining whether a ratio between the number of disagreements and the number of agreements pass a predetermined threshold; and
in response to determining the ratio passes the predetermined threshold, initiating the corrective action.

5. The method as set forth in claim 4, wherein the corrective action comprises at least one of generating an alert for a user, automatic retraining of the prediction model, or initiating an investigation, and wherein the prediction model is automatically retrained based on a predefined threshold or real time analytics using newly detected drifts.

6. A non-transitory computer readable medium having stored thereon instructions for detecting drift in models comprising executable code which when executed by one or more processors, causes the processors to carry out the steps of the method according to one or more of claims 1 - 5.

7. A network traffic manager apparatus, comprising memory comprising programmed instructions stored in the memory and one or more processors configured to be capable of executing the programmed instructions stored in the memory to carry out the steps of the method according to one or more of claims 1 - 5.

8. A network traffic management system, comprising one or more traffic management apparatuses, client devices, or server devices, the network traffic management system comprising memory comprising programmed instructions stored thereon and one or more processors configured to be capable of executing the programmed instructions to carry out the steps of the method according to one or more of claims 1 - 5.
